# DEMANDE DE BREVET EUROPEEN

(11) **EP 1 769 965 A1**
(43) Date de publication de la demande: **04.04.2007**
(21) Numéro de dépôt: 06300968.2
(22) Date de dépôt: 21.09.2006
(51) Int. Cl.: B60N 2/16

(54) **Siège à rehausse réglable pour véhicule automobile**

(30) Priorité: 28.09.2005 FR 0509890
(71) Demandeur: RENAULT S.A.S., 92100 Boulogne Billancourt (FR)
(72) Inventeur: Lallement, Stéphane, 28130, PIERRES (FR)

(57) **Abrégé**

Le siège à rehausse réglable pour véhicule automobile (10) comportant un châssis d'assise (14), des moyens de réglage de la rehausse (24, 26) du châssis d'assise (14) et un dispositif d'anti sous-marinage apte à maintenir en position ledit châssis d'assise (14) par rapport à un châssis inférieur (12) en cas de choc est remarquable en ce qu'il comporte des moyens d'activation sélective du dispositif d'anti sous-marinage en cas de choc.

## Description

La présente invention concerne un siège à rehausse réglable pour véhicule automobile.

Différents types de sièges à rehausse réglable pour véhicule automobile sont connus. Ceux-ci permettent de régler la hauteur de l'assise du siège par rapport à la structure du véhicule pour un meilleur confort du conducteur ou des autres passagers du véhicule. Ce réglage de la hauteur de l'assise est réalisé, par exemple, comme cela est décrit dans le document FR 2 801 851, au moyen de bielles montées à rotation entre un châssis inférieur pouvant coulisser longitudinalement par rapport à la structure du véhicule, et un châssis d'assise sur lequel l'assise et le dossier du siège sont fixés, le dossier du siège pouvant, de préférence, pivoter par rapport au châssis d'assise autour d'un axe transversal.

Un inconvénient d'un tel siège à rehausse réglable pour véhicule automobile provient de la relative fragilité des bielles qui sont soumises à des efforts importants en cas de choc longitudinal frontal ou arrière. Dans ce cas, les bielles ont tendance à se déformer ce qui entraîne, de manière connue, une prise d'angle du châssis d'assise par rapport au châssis inférieur. Ce phénomène, connu sous le nom de « sous-marinage », peut engendrer des blessures graves des occupants du véhicule car les systèmes de sécurité connus comme les coussins gonflables de sécurité ou même les ceintures de sécurité sont moins efficaces en cas de sous-marinage de l'assise.

Une solution connue consiste à dimensionner les bielles de manière à ce qu'elles résistent aux chocs longitudinaux. Cette solution n'est cependant pas satisfaisante, les pièces étant surdimensionnées par rapport à une utilisation « normale », c'est-à-dire en dehors des phases de choc, ce qui engendre un encombrement et un poids superflus.

On connaît également de FR 2 801 851, un siège à rehausse pour véhicule automobile comportant un dispositif de réglage de rehausse, des moyens de verrouillage et de déverrouillage du dispositif de réglage et des moyens de renfort encaissant une partie des efforts s'appliquant sur le siège et notamment sur l'assise, en cas de choc frontal notamment, de manière à diminuer le sous-marinage. Selon le document FR 2 801 851, les moyens de renfort peuvent, par exemple, être réalisés sous la forme d'une barre montée à rotation par rapport au châssis d'assise et au châssis inférieur, la liaison entre la barre et le châssis inférieur pouvant être éliminée de manière à permettre le réglage de la hauteur de l'assise.

On connaît par ailleurs de DE 25 27 047 un siège à rehausse pour véhicule automobile, où un dispositif de soutien à amortissement est disposé entre le châssis d'assise et le châssis inférieur. Ce dispositif de soutien à amortissement est formé au moyen d'un jeu de bielles permettant de déplacer le châssis d'assise par rapport au châssis inférieur, tout en conservant le châssis d'assise et le châssis inférieur parallèles. Deux bielles avant et deux bielles arrière forment, respectivement, un bras coudé avant et un bras coudé arrière entre le châssis d'assise et le châssis inférieur. Les articulations des deux bras coudés sont accouplées au moyen d'une barre de stabilisation. Une barre de renfort est prévue en diagonale entre le châssis d'assise et le châssis inférieur. Enfin, un dispositif amortissant est disposé entre le châssis inférieur et l'articulation d'un des bras coudés formés par les bielles.

Ces solutions imposent de mettre en oeuvre en permanence des moyens de renfort et de stabilisation qui ne sont utiles qu'en cas de choc. Ces solutions engendrent un surpoids inutile en fonctionnement normal et un encombrement important.

Par ailleurs, on connaît du document FR 2 772 689, déposé par le demandeur, un dispositif pour siège automobile apte à être déployé sélectivement en cas de choc d'une position inactive jusqu'à une position active. Par « déployé sélectivement en cas de choc », on entend que le dispositif est en position inactive en fonctionnement normal et qu'il est déployé dans sa position active uniquement en cas de choc. Le dispositif décrit dans le document FR 2 772 689 comporte une barre transversale qui coulisse dans des glissières sensiblement verticales disposées sous l'assise. Cette barre est traversée par un câble qui, lors d'un choc, est mis sous tension et soulève la barre transversale jusqu'à sa position active où elle prend appui sous le coussin d'assise. Le but de cette barre est alors de déformer le coussin d'assise pour former un bossage sous les jambes de l'occupant du siège et ainsi éviter un glissement de cet occupant sous la ceinture de sécurité. Cependant, ce dispositif n'empêche par la prise d'angle de l'assise par rapport à la structure de soubassement et n'est donc pas un dispositif d'anti sous-marinage apte à maintenir en position un châssis d'assise par rapport à un châssis inférieur en cas de choc. De plus, il présente l'inconvénient de ne pas pouvoir être adapté à un siège à rehausse réglable puisque la hauteur à laquelle la barre peut effectivement s'élever est fixée par la hauteur des glissières disposées sous le siège. Enfin, le dispositif décrit est relativement encombrant puisqu'il occupe une grande partie de l'espace située sous l'assise du siège, espace qui peut, par exemple, être aménagé pour offrir des possibilités de rangement supplémentaire.

Le but de l'invention est de proposer un siège à rehausse réglable pour véhicule automobile, comportant un dispositif d'anti sous-marinage d'encombrement réduit, apte à maintenir en position le châssis d'assise par rapport au châssis inférieur en cas de choc et permettant d'éviter le surdimensionnement des pièces de soutien selon la technique antérieure.

On atteint ce but de l'invention au moyen d'un siège à rehausse réglable pour véhicule automobile comportant un châssis d'assise, des moyens de réglage de la rehausse du châssis d'assise et un dispositif d'anti sous-marinage apte à maintenir en position ledit châssis d'assise par rapport à un châssis inférieur en cas de choc, caractérisé en ce qu'il comporte des moyens d'activation sélective du dispositif d'anti sous-marinage en cas de choc.

Ainsi, comme cela sera explicité plus en détails dans la suite de la description, il est possible de réduire les dimensions des pièces de soutien, celles-ci supportant le châssis d'assise uniquement en phase de fonctionnement normal du véhicule automobile, c'est-à-dire en dehors des phases de choc. Au contraire, en cas de choc et uniquement en cas de choc, le dispositif d'anti sous-marinage est activé pour réaliser le maintien du châssis d'assise par rapport au châssis inférieur. Par ailleurs, ce dispositif d'anti sous-marinage n'étant activé qu'en cas de choc, il est possible de réduire son encombrement dans les phases de fonctionnement normal du véhicule automobile.

De préférence, le dispositif d'anti sous-marinage comporte un élément mobile entre des postions inactive et active dans lesquelles ledit élément mobile est, respectivement, écarté dudit châssis d'assise et en appui sur ledit châssis d'assise de manière à limiter le rapprochement desdits châssis inférieur et d'assise.

Selon une première variante de l'invention, ledit élément mobile est une tige mobile en translation par rapport audit châssis inférieur.

Selon une seconde variante de l'invention, ledit élément mobile est une barre montée en rotation par rapport au châssis inférieur.

De manière préférée, ladite barre comporte des moyens de retenue aptes, dans la position active de ladite barre, à limiter l'écartement entre lesdits châssis inférieur et d'assise.

Ainsi, avantageusement, on limite le sous-marinage en empêchant un écartement excessif des châssis inférieur et d'assise.

De préférence, lesdits moyens de retenue comportent une encoche apte, dans la position active de ladite barre, à coopérer avec ledit châssis d'assise.

On réalise ainsi, avantageusement, la fonction de maintien de l'écartement entre les châssis inférieur et d'assise de manière simple et économique.

De manière préférée, ladite encoche est apte, dans la position active de ladite barre, à limiter l'écartement entre lesdits châssis inférieur et d'assise.

Ainsi, avantageusement, chaque barre permet de contrecarrer le sous-marinage en cas de choc avant et de choc arrière. Il est donc possible de réduire le nombre de barres à mettre en oeuvre.

De préférence, lesdits moyens d'activation comportent des moyens pyrotechniques et des moyens pour allumer lesdits moyens pyrotechniques en cas de choc.

De tels moyens pyrotechniques assurent une bonne rapidité de réponse du dispositif d'anti sous-marinage selon l'invention.

De manière préférée, ledit dispositif d'anti sous-marinage est monté sur ledit châssis inférieur, de préférence encore, au niveau de la partie supérieure dudit châssis inférieur.

On réduit ainsi, de manière avantageuse, l'encombrement du dispositif d'anti sous-marinage au niveau châssis inférieur du siège selon l'invention.

D'autres caractéristiques de l'invention apparaîtront de la description qui va suivre, donnée à titre d'exemple illustratif et non limitatif en regard des figures ci-annexées, sur lesquelles :
- la figure 1 représente en vue de côté un schéma d'un siège à rehausse réglable pour véhicule automobile selon un premier mode de réalisation de l'invention ;
- la figure 2 représente schématiquement une coupe partielle d'un dispositif élémentaire de maintien de rehausse selon le mode de réalisation de la figure 1 en vue de face ;
- la figure 3 représente un schéma d'une coupe transversale partielle selon B-B d'un dispositif d'anti sous-marinage selon un second mode de réalisation ; et
- la figure 4 représente en vue de côté un schéma d'un siège à rehausse réglable pour véhicule automobile comportant un dispositif d'anti sous-marinage représenté sur la figure 3.

Dans la description qui va suivre, les éléments identiques ou analogues mis en oeuvre dans les deux modes de réalisation sont représentés avec le même signe de référence.

Dans la description et les revendications qui vont suivre, les indications relatives à la localisation des éléments décrits, telles que « avant », « droite », « gauche », « arrière », « latéral », « inférieur », « longitudinal », « transversal » doivent être interprétées classiquement comme celles que fournirait un observateur assis dans le véhicule et regardant vers son capot, le véhicule étant sur une surface horizontale.

Le siège à rehausse réglable 10 comporte un châssis inférieur 12 qui supporte un châssis d'assise 14 sur lequel reposent l'assise de siège 16 et le dossier du siège 18, qui est monté, à l'arrière de l'assise de siège 16, à rotation autour d'un axe géométrique A1 sensiblement transversal.

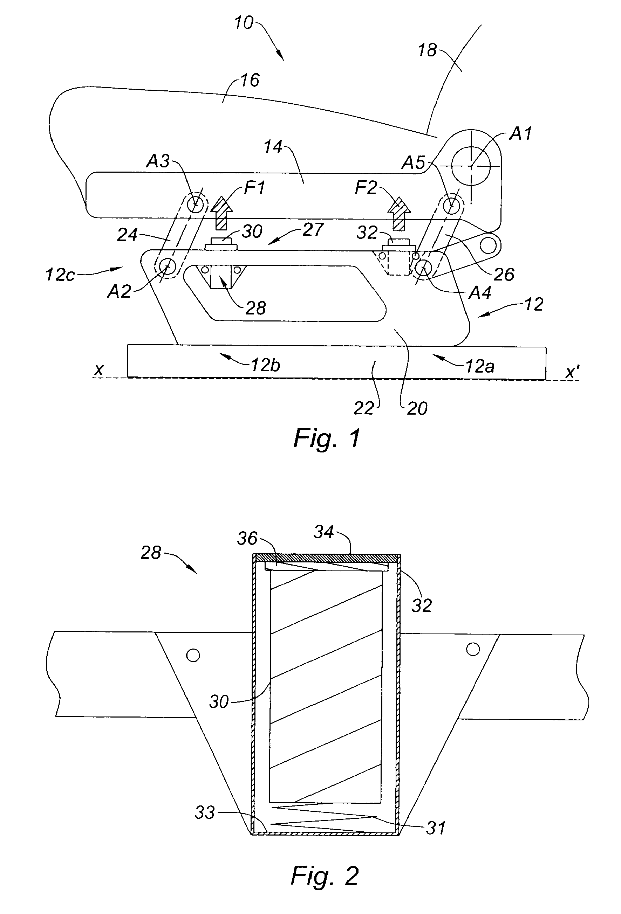

Le siège 10 étant symétrique par rapport à son plan médian, on ne décrira par la suite que la partie du siège 10 visible sur la figure 1, étant entendu que cette partie du siège 10 est reproduite symétriquement par rapport au plan de symétrie du siège 10.

De préférence, le châssis d'assise 14 ainsi que l'assise 16 ont une forme sensiblement quadrangulaire, par exemple rectangulaire ou trapézoïdale.

Le châssis inférieur 12 comporte un montant 20 monté dans une glissière 22, sensiblement parallèle à l'axe longitudinal X-X', fixe par rapport au véhicule automobile. De préférence, le châssis inférieur 12 est réalisé sous la forme d'un cadre, laissant libre l'espace entre les branches de ce cadre. De préférence encore, le châssis inférieur 12 est réalisé sous la forme de deux montants 20, laissant ainsi un accès à l'espace libre formé sous le châssis d'assise 14 entre les deux montants 20.

Le châssis d'assise 14 est couplé au châssis inférieur 12 au moyen d'une bielle avant 24 et d'une bielle arrière 26, de chaque côté du châssis inférieur 12. La bielle avant 24 est montée libre en rotation autour de l'axe géométrique A2 par rapport au châssis inférieur 12 et autour de l'axe géométrique A3 par rapport au châssis d'assise 14. De même, la bielle arrière 26 est montée libre en rotation autour de l'axe géométrique A4 par rapport au châssis inférieur 12 et autour de l'axe A5 par rapport au châssis d'assise 14. Les axes géométriques A2, A3, A4 et A5 sont sensiblement transversaux.

Ainsi, les bielles avant 24 et arrière 26 forment, dans le plan de la figure 1, avec le châssis inférieur 12 et le châssis d'assise 14 un parallélogramme déformable permettant le réglage en hauteur de l'assise de siège 16 par rapport au châssis inférieur 12 et donc par rapport au plancher du véhicule automobile. Ainsi, avantageusement, il est possible de régler la hauteur de l'assise de siège 16 en fonction de la taille de l'occupant du siège 10.

Le réglage de rehausse peut être bloqué au moyen d'une commande d'arrêt connue en soi et non décrite plus en détails ici.

L'inclinaison du dossier de siège 18 par rapport à l'assise de siège 16 peut également être réglée de manière connue en soi.

Selon l'invention, le siège 10 à rehausse réglable pour véhicule automobile comporte un dispositif d'anti sous-marinage 27 apte à maintenir en position le châssis d'assise 14 par rapport au châssis inférieur 12. Ce dispositif d'anti sous-marinage 27 comporte quatre dispositifs élémentaires 28 de maintien de rehausse en cas de choc qui sont montés sur le châssis inférieur 12 à proximité des points de fixation des bielles avant 24 et arrière 26 de manière sensiblement symétrique par rapport au plan de symétrie du siège 10. De préférence, les dispositifs élémentaires 28 sont montés au niveau de la partie supérieure 12c du châssis inférieur 12. De préférence encore, ces dispositifs élémentaires 28 sont disposés entre les points de fixation des bielles avant 24 et arrière 26.

Ces dispositifs élémentaires 28 comportent une tige 30 montée dans un cylindre 32 solidaire du châssis inférieur 12, de manière à pouvoir coulisser, selon un axe sensiblement vertical, entre une position basse, telle que représentée figure 1, correspondant à la position inactive du dispositif d'anti sous-marinage 27 selon l'invention, et une position haute, correspondant à la position active du dispositif d'anti sous-marinage 27 selon l'invention où les tiges 30 soutiennent effectivement le châssis d'assise 14. Le coulissement des tiges 30 depuis leur position inactive jusqu'à leur position active est schématisé par les flèches F1 et F2 sur la figure 1. Afin de faire coulisser une tige 30 depuis sa position basse jusqu'à sa position haute, un ressort précontraint 31 est disposé dans le cylindre 32, entre la tige 30 et le fond 33 du cylindre 32.

De préférence, les dispositifs élémentaires 28 sont disposés symétriquement par rapport au plan de symétrie du siège 10. On préfère également disposer, de chaque côté du siège 10, un dispositif élémentaire 28 au niveau de la moitié avant 12b du châssis inférieur 12 et un dispositif élémentaire 28 au niveau de la moitié arrière 12a du châssis inférieur.

En dehors des phases de chocs, les dispositifs élémentaire de maintien de rehausse de siège 28 sont maintenus dans leur position inactive (tige 30 en position basse dans le cylindre 32, ressort 31 précontraint) du fait de la présence d'un couvercle 34 fermant le cylindre 32 de manière à maintenir le ressort 31 précontraint.

Dès qu'un choc intervient, le couvercle 34 est expulsé par un actionneur pyrotechnique 36 et le ressort 31 se détend entraînant la tige 30 selon F1 et/ou F2 jusqu'à sa position active où la tige 30 prend appui sur une partie rigide du châssis d'assise 14. De préférence, cet actionneur pyrotechnique est commandé simultanément à un dispositif de retenue de l'occupant du siège comme la ceinture de sécurité et/ou un dispositif de coussins gonflables de sécurité et est actionné en cas d'accélération supérieure à une valeur seuil correspondant à un choc frontal avant ou arrière d'une ampleur prédéterminée.

Selon un mode de mise en oeuvre préféré, les dispositifs élémentaires 28 sont actionnés, en cas de choc, par paire avant et arrière. En effet, en cas de choc avant, par exemple, le châssis d'assise 14 à tendance à pivoter dans le sens antihoraire sur la figure 1, c'est-à-dire que la partie avant du châssis d'assise 14 s'abaisse. Dans ce cas, seuls les dispositifs élémentaires 28 de maintien disposés à l'avant 12b du châssis inférieur 12 sont efficaces. De même, en cas de choc arrière, seuls les dispositifs élémentaires 28 de maintien disposés à l'arrière 12a du châssis inférieur 12 sont efficaces. Cependant, pour pouvoir mettre en oeuvre indépendamment les deux dispositifs élémentaires 28 de maintien avant et arrière, il est nécessaire de prévoir un actionneur supplémentaire, celui-ci étant de préférence un actionneur pyrotechnique.

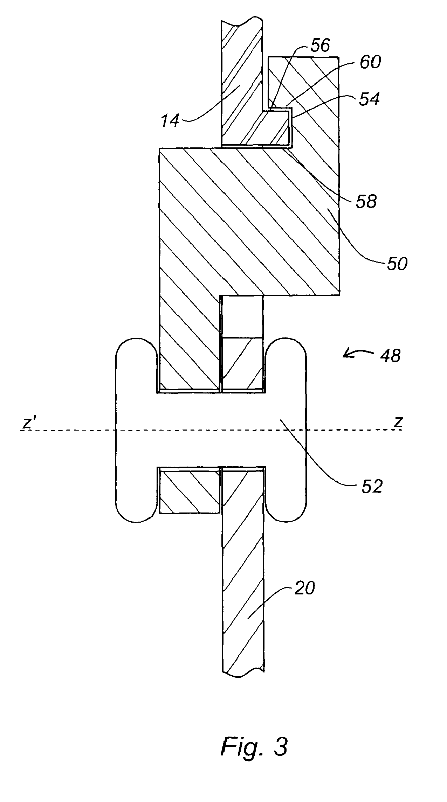

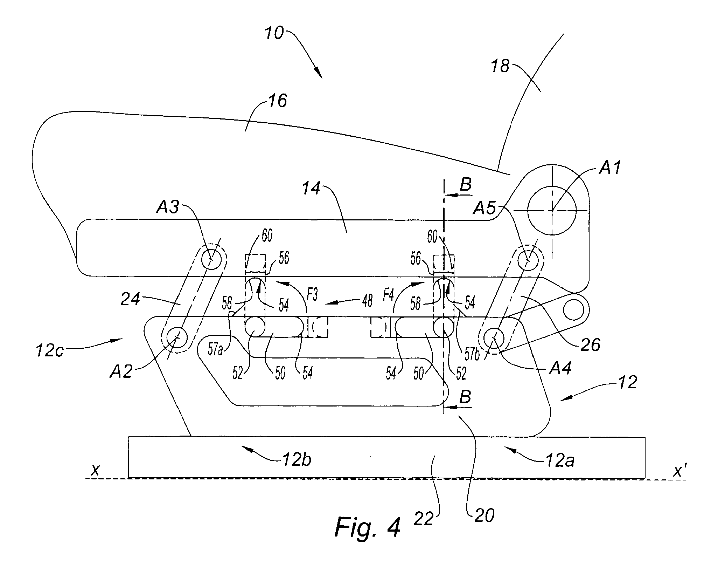

Selon un deuxième mode de réalisation, représenté aux figures 3 et 4, les dispositifs élémentaires de maintien à tige et cylindre 28 du premier mode de réalisation décrit en regard de la figure 1, sont remplacés ou complétés par des dispositifs élémentaires de maintien à barre 48, le reste du siège 10 restant identique ou quasi-identique avec les mêmes références numériques.

Ces dispositifs élémentaires de maintien à barre 48 comportent une barre 50 montée à rotation par rapport au châssis inférieur 12 autour d'un pivot 52. Cette barre 50 est ainsi apte à pivoter depuis une position dite inactive (sensiblement horizontale) où la barre 50 ne soutient pas le châssis d'assise 14 jusqu'à une position dite active (sensiblement verticale) où la barre 50, formant came, soutient au contraire le châssis d'assise 14. Dans le mode de réalisation représenté à la figure 3 en position active, la barre 50 présente, à cet effet, une encoche 54 apte à coopérer avec une saillie 56 complémentaire réalisée sur le châssis d'assise 14. Afin de réaliser le pivotement de la barre 50 depuis sa position inactive vers sa position active, un ressort de torsion précontraint (non représenté) est disposé autour du pivot 52.

En cas de choc longitudinal, un actionneur pyrotechnique (non représenté), commande le déploiement des dispositifs élémentaires de maintien à barre 48 en permettant au ressort de torsion de se détendre. Ainsi, la barre 50 est entraînée en rotation selon F3 et/ou F4 jusqu'à ce que la saillie 56 soit en contact avec les surfaces internes inférieure 58 et supérieure 60 de l'encoche 54. Le contact de la saillie 56 avec ces surfaces internes inférieure 58 et supérieure 60 de l'encoche 54 empêche le sous-marinage du châssis d'assise 14 que ce soit en cas de choc avant ou de choc arrière. Des butées d'arrêt avant 57a et arrière 57b sont prévues en option sur la partie supérieure du montant 20 pour limiter la rotation des barres 50 lors de leur déplacement en position active. Ainsi, seuls deux dispositifs élémentaires de maintien à barre 48 disposés chacun d'un côté du siège 10, suffisent pour assurer le maintien de rehausse de siège en cas de choc avant ou arrière.

Bien entendu, la présente invention ne se réduit pas aux seuls modes de réalisation présentés ici à titre d'exemples illustratifs et non limitatifs et de nombreuses modifications sont possibles sans sortir du cadre de l'invention.

Le châssis inférieur est éventuellement formé par le plancher du véhicule automobile dans lequel ledit siège est monté.

En particulier, les moyens d'activation peuvent prendre d'autres formes que celle d'un ressort précontraint comme cela est le cas dans les exemples décrits ci-avant. Par exemple, on peut imaginer de mettre en oeuvre un vérin pneumatique ou électrique.

Par ailleurs, le dispositif de maintien de rehausse de siège peut être mis en oeuvre avec tout type de siège de véhicule automobile à rehausse.

## Revendications

1. Siège à rehausse réglable pour véhicule automobile (10) comportant un châssis d'assise (14), des moyens de réglage de la rehausse (24, 26) du châssis d'assise (14) et un dispositif d'anti sous-marinage apte à maintenir en position ledit châssis d'assise (14) par rapport à un châssis inférieur (12) en cas de choc, **caractérisé en ce qu'**il comporte des moyens d'activation sélective dudit dispositif d'anti sous-marinage en cas de choc.

2. Siège pour véhicule automobile (10) selon la revendication 1, **caractérisé en ce que** ledit dispositif d'anti sous-marinage comporte un élément mobile (30, 50) entre des positions inactive et active dans lesquelles ledit élément mobile (30, 50) est, respectivement, écarté dudit châssis d'assise (14) et en appui sur ledit châssis d'assise (14) de manière à limiter le rapprochement desdits châssis inférieur (12) et d'assise (14).

3. Siège pour véhicule automobile (10) selon la revendication 2, **caractérisé en ce que** ledit élément mobile est une tige (30) mobile en translation par rapport audit châssis inférieur (12).

4. Siège pour véhicule automobile (10) selon la revendication 2, **caractérisé en ce que** ledit élément mobile est une barre (50) montée en rotation par rapport au châssis inférieur (12).

5. Siège pour véhicule automobile (10) selon la revendication 4, **caractérisé en ce que** ladite barre (50) comporte des moyens de retenue (60) aptes, dans la position active de ladite barre (50), à limiter l'écartement entre lesdits châssis inférieur (12) et d'assise (14).

6. Siège pour véhicule automobile (10) selon la revendication 5, **caractérisé en ce que** lesdits moyens de retenue comportent une encoche (54) apte, dans la position active de ladite barre (50), à coopérer avec ledit châssis d'assise (14).

7. Siège pour véhicule automobile (10) selon la revendication 6, **caractérisé en ce que** ladite encoche (54) est apte, dans la position active de ladite barre (50), à limiter l'écartement entre lesdits châssis inférieur et d'assise.

8. Siège pour véhicule automobile (10) selon l'une quelconque des revendications précédentes, **caractérisé en ce que** lesdits moyens d'activation comportent des moyens pyrotechniques et des moyens pour allumer lesdits moyens pyrotechniques en cas de choc.

9. Siège pour véhicule automobile (10) selon l'une quelconque des revendications précédentes, **caractérisé en ce que** ledit dispositif d'anti sous-marinage est monté sur ledit châssis inférieur (12).

10. Siège pour véhicule automobile (10) selon la revendication 9, **caractérisé en ce que** ledit dispositif d'anti sous-marinage est monté au niveau de la partie supérieure (12c) dudit châssis inférieur (12).
